Europäisches Patentamt

European Patent Office

Office européen des brevets

(19)

(11) Veröffentlichungsnummer: **0 213 414**
**B1**

(12) **EUROPÄISCHE PATENTSCHRIFT**

(45) Veröffentlichungstag der Patentschrift:
24.05.89

(21) Anmeldenummer: **86110667.2**

(22) Anmeldetag: **01.08.86**

(51) Int. Cl.⁴: **B 60 S 1/50,** F 01 P 11/02,
B 65 D 25/08

(54) Betriebsmittelbehälter in Kraftfahrzeugen.

(30) Priorität: **02.08.85 DE 3527700**

(43) Veröffentlichungstag der Anmeldung:
**11.03.87 Patentblatt 87/11**

(45) Bekanntmachung des Hinweises auf die Patenterteilung:
**24.05.89 Patentblatt 89/21**

(84) Benannte Vertragsstaaten:
**DE FR GB IT SE**

(56) Entgegenhaltungen:
**DE-C- 3 210 260**
**FR-A- 1 595 227**
**FR-A- 2 357 438**

(73) Patentinhaber: **Iveco Magirus Aktiengesellschaft, Schillerstrasse 2 Postfach 27 40, D-7900 Ulm/Donau (DE)**

(72) Erfinder: **May, Walter, Dipl.-Ing., Beyerstrasse 33, D-7900 Ulm (DE)**

(74) Vertreter: **Socha, Peter, Iveco Magirus AG Postfach 2740 Schillerstrasse 2, D-7900 Ulm (DE)**

**Beschreibung**

Die Erfindung betrifft einen Behälter für Betriebsmittel in Kraftfahrzeugen, der im Motorraum angeordnet ist, gemäß Oberbegriff des Anspruchs 1.

Aus DE-C-32 10 260 und DE-U-72 07 701 sind Behälter für Betriebsmittel in Kraftfahrzeugen bekannt, die innere Trennwände besitzen, um voneinander getrennte Räume für unterschiedliche flüssige Betriebsmittel einzurichten, die in einem Kraftfahrzeug verwendet werden, beispielsweise Waschflüssigkeit und Kühlflüssigkeit. Die Ausgestaltung ist so getroffen, daß der eine Raum immer für das Wasser einer Scheibenwaschanlage und der andere Raum für die Kühlflüssigkeit vorgesehen ist.

Aufgabe der Erfindung ist die Schaffung eines Behälters der eingangs genannten Art, der sehr einfach aufgebaut und kompakt in seinen Abmessungen ist und innere Kammern aufweist, die je nach Betriebszweck eines individuellen Kraftfahrzeugs unterschiedlich verwendet werden können.

Gelöst wird die der Erfindung zugrundeliegende Aufgabe durch die im kennzeichnenden Teil des Anspruchs 1 angegebenen Mittel. Weitere vorteilhafte Erfindungsmerkmale ergaben sich aus den Unteransprüchen 2 bis 7.

Die Erfindung sieht mithin einen integrierte Kammern aufweisenden Kompaktbehälter vor, wobei vorzugsweise je eine erste, zweite, dritte und vierte Kammer einfach durch zwei innere Trennwände eingerichtet werden: nämlich eine durchgehende Horizontaltrennwand und eine durchgehende Vertikaltrennwand. Somit sind die jeweils einander horizontal benachbarte obere erste und dritte Kammer bzw. untere zweite und vierte Kammer derart zueinander angeordnet, daß die erste und zweite bzw. die dritte und vierte Kammer jeweils einander vertikal benachbart sind.

Unmittelbar über dem Behälterboden und unmittelbar über der Horizontaltrennwand befindet sich in der vertikalen Trennwand jeweils eine verschließbare Flüssigkeitsöffnung, die im geöffneten Zustand die horizontal benachbarte erste und dritte bzw. zweite und vierte Kammer kommunizierend verbinden. Um dabei in den vier Kammern einen Luftausgleich einzurichten, sind ferner oberseitig zwischen der ersten und dritten bzw. zweiten und vierten Kammer in der verikalen Trennwand verschließbare Entlüftungsöffnungen vorgesehen. Desweiteren befindet sich in der horizontalen Trennwand zwischen den vertikal benachbarten dritten und vierten Kammern, die gegebenenfalls mit Waschflüssigkeit für eine Scheibenwaschanlage gefüllt werden können, eine weitere verschließbare Verbindungsöffnung. Der Gesamtbehälter ist so getroffen, daß behälteroberseitig bei der dritten Kammer ein Einfüllstutzen für Waschflüssigkeit einer Scheibenwaschanlage und bei der ersten Kammer ein Einfüllstutzen zum Einfüllen von Kühlwasser ausgebildet sind. Ferner sind Außenanschlüsse und ein Überdruckventil vorgesehen, so daß der Behälter für eine Scheibenwaschanlage auch oder alleinig für Kühlflüssigkeit eines flüssigkeitsgekühlten Motors verwendet werden kann.

Die verschließbaren Öffnungen in der Vertikal- und in der Horizontaltrennwand sind vorzugsweise durchbrechbare Öffnungen, d.h. die Öffnungen weisen einen durchbrechbaren Umfangsrand mit verringerter Wandstärke auf, so daß ein roh gefertigter Behälter grundsätzlich völlig geschlossene innere Trennwände besitzt, deren einzelne Öffnungen je nach Bedarf durchgestoßen werden können, um entweder einen Aufnahmeraum für Waschflüssigkeit einer Scheibenwaschanlage oder einen Aufnahmeraum bzw. einen Ausgleichsbehälter für die Kühlflüssigkeit eines Motors zu schaffen, oder für beide vorgenannten Flüssigkeiten. Durchgestoßene Öffnungen können nach Belieben in vorteilhafter Weiterbildung der Erfindung wieder geschlossen werden, entweder zweckmäßigerweise durch von außen betätigbare Stopfen oder aber durch von außen betätigbare Schieber, die in den Trennwänden angeordnet sind. Dadurch kann auch nachträglich der Verwendungszweck des Behälters individuell gestaltet werden.

Der Behälter kann also mit seinen sämtlichen vier Kammern nur als Ausgleichs- und Vorratsbehälter für Fahrzeuge mit großem Kühlwasservolumen verwendet werden, wenn sämtliche Öffnungen in der vertikalen Trennwand geöffnet und die weitere Verbindungsöffnung in der horizontalen Trennwand geschlossen sind. Sind umgekehrt sämtliche Öffnungen in der vertikalen Trennwand geschlossen und die Verbindungsöffnung in der horizontalen Trennwand geöffnet, die die übereinander angeordneten dritten und vierten Kammern dann miteinander verbindet, so eignen sich diese Kammern zum Füllen mit Waschflüssigkeit einer Scheibenwaschanlage, während die anderen übereinander angeordneten ersten und zweiten Kammern einen oberen Vorratsbehälter für die Kühlflüssigkeit eines Motors bzw. einen unteren Ausgleichsbehälter der Kühlflüssigkeit schaffen, die beide durch ein inneres Ausgleichsrohr miteinander verbunden sind. In der unteren Ausgleichskammer ist in an sich bekannter Weise ein Überdruckventil vorgesehen, welches bei Überschreiten eines maximalen Betriebsdruckes der Kühlflüssigkeit nach außen hin öffnet und Druck abgibt.

Durch die Erfindung ergibt sich somit auch die mögliche Zusammenfassung von Kühlwasser-Vorrats- und Ausgleichsbehälter mit dem Vorratsbehälter für die Scheibenwaschflüssigkeit und dadurch die Einsparung eines Behälters und dessen Befestigungen, sowie die daraus resultierende Platzersparnis. Der Behälter kann in größeren Stückzahlen in seinem Grundaufbau gefertigt und durch einfache Nachbehandlungsmaßnahmen seinem individuellen Verwendungszweck zugeführt werden. Durch Veränderung der Einbaulage der inneren Trennwände können die Vorratsvolumina der aufzunehmenden Betriebsmittel verändert werden. Durch die horizontale Teilung des Behälters (kühlwasserseitig mit Vorratsraum oben — Ausgleichsraum unten) läßt sich die statische Höhe des Wasservorrats über dem Motor erhöhen.

Die Erfindung wird nachfolgend anhand von Ausführungsbeispielen unter Bezugnahme auf die beigefügte Zeichnung näher beschrieben; es zeigen:

Fig. 1 einen schematischen Vertikalschnitt durch den Behälter mit der Erfindung,

Fig. 2 den Behälter nach Fig. 1 in Verwendung ausschließlich als reinen Vorrats- und Ausgleichsbehälter für die Kühlflüssigkeit eines (kalten) Motors,

Fig. 3 eine Einzelheit der Fig. 2 bei betriebswarmem Motor,

Fig. 4 den Behälter nach Fig. 1 in Verwendung sowohl für die Aufnahme von Scheibenwaschflüssigkeit als auch für die Aufnahme von Kühlwasser zum Kühlen eines Motors,

Fig. 5 einen schematischen Vertikalschnitt durch einen anderen Behälter, und

Fig. 6 den Behälter nach Fig. 5 in Verwendung ausschließlich für die Aufnahme von Kühlwasser.

Der Behälter 20 gemäß Zeichnung weist grundsätzlich Quaderform auf, wobei die Außenkontur des Behälters auch einem Befestigungsort des Behälters im Motorraum eines Fahrzeugs angepaßt sein kann.

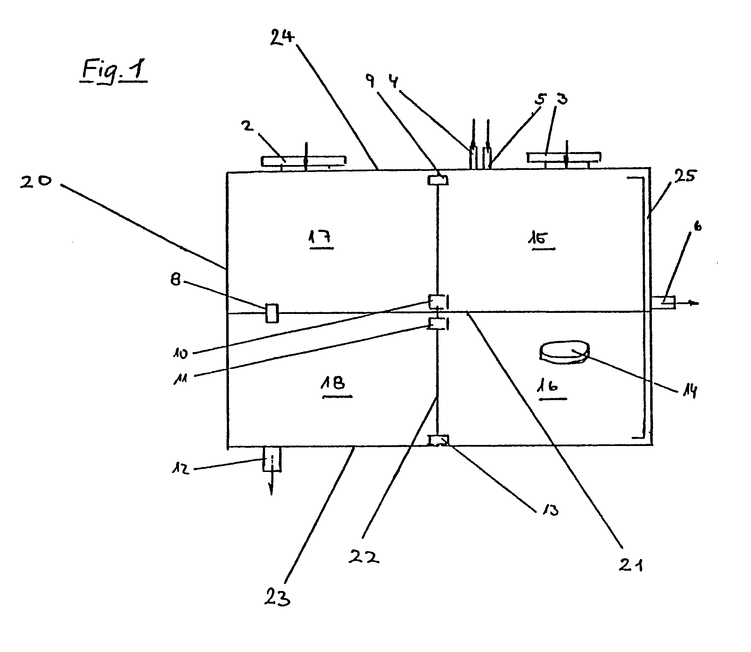

Der Behälter 20 besitzt gemäß Ausführungsbeispiel der Fig. 1 bis 3 etwa eine mittig angeordnete innere durchgehende vertikale Trennwand 22 und eine etwa mittig angeordnete horizontale Trennwand 21, wobei in der vertikalen Trennwand 22 unmittelbar über dem Behälterboden 23 und unmittelbar über der Horizontaltrennwand 21 verschließbare Flüssigkeitsöffnungen 13, 10 und unmittelbar unter dem Behälterdeckel 24 und der Horizontaltrennwand 21 verschließbare Entlüftungsöffnungen 9, 11 sowie in der Horizontaltrennwand 21 zumindest eine weitere verschließbare Verbindungsöffnung 8 für die Verwendung eines übereinander angeordneten Kammerpaares 17, 18 als Scheibenwaschflüssigkeitsbehältnis mit einem oberen Einfüllstutzen 2 vorgesehen sind, während das andere benachbarte übereinander angeordnete Kammerpaar 15, 16 Außenanschlüsse 4, 5, 6 und Öffnungen 3, 14 für ein oberes Kühlflüssigkeits-Vorratsbehältnis 15 und ein unteres Kühlflüssigkeits-Ausgleichsbehältnis 16 enthält, die über ein inneres Ausgleichsrohr 25 miteinander verbunden sind.

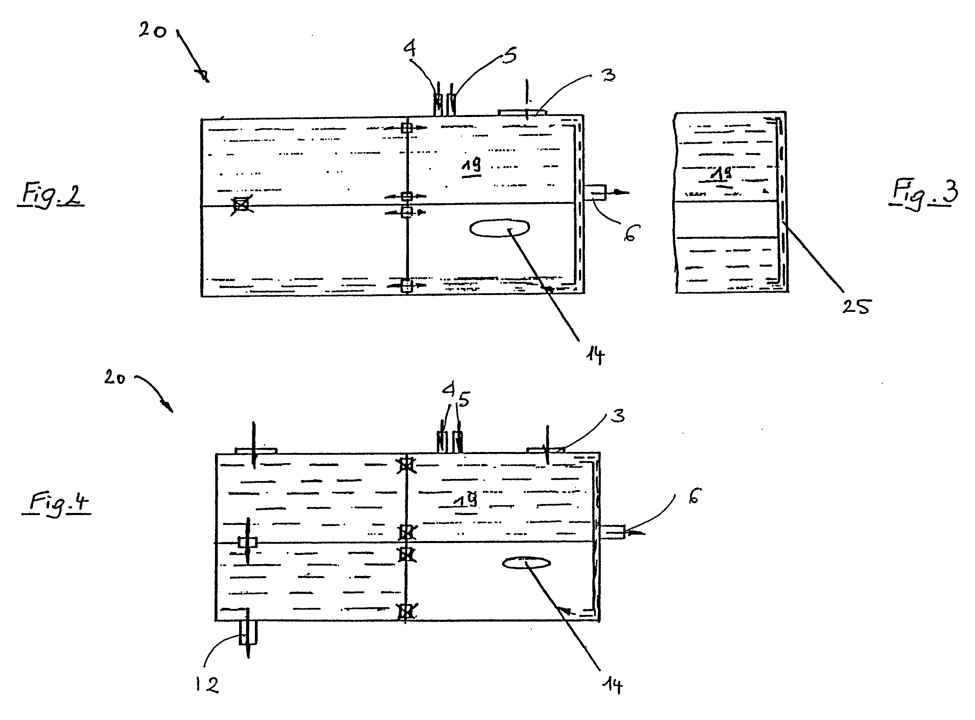

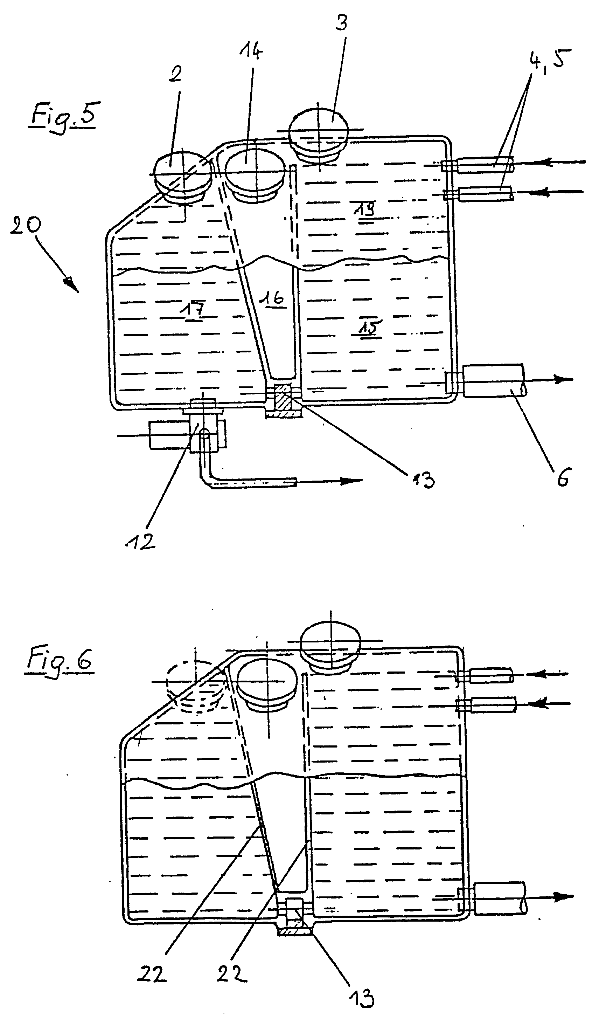

In den Fig. 2 und 3 ist der Einsatz des Behälters 20 als reiner Vorrats- und Ausgleichsbehälter für die Kühlflüssigkeit eines flüssigkeitsgekühlten Motors gezeigt. Fig. 2 veranschaulicht hierbei den Kühlwasserstand im Ausgleichsbehälter bei kaltem Motor, Fig. 3 bei warmem Motor.

In Fig. 4 ist der Einsatz des Behälters 20 als Kombination von Vorrats- und Ausgleichsbehälter für Kühlflüssigkeit mit dem Vorratsbehälter für Scheibenwaschflüssigkeit gezeigt.

Der Behälter 20 umfaßt vier innere Kammern: Kammer 15 dient der Aufnahme des Kühlwasservorrats; darunterliegende Kammer 16 bildet den Ausgleichsraum des Kühlwassers; Kammer 17 dient als Aufnahmeraum für den Kühlwasservorrat oder aber für den Vorrat von Scheibenwaschflüssigkeit, während darunterliegende Kammer 18 als Ausgleichsraum für Kühlflüssigkeit oder als Vorratsraum für Scheibenwaschflüssigkeit verwendet werden kann.

Zur Befüllung des Behälters 20 sind der Einfüllstutzen 2 für die Einfüllung von einem Betriebsmittel 19 in Form von Scheibenwaschflüssigkeit und der Einfüllstutzen 3 für ein Betriebsmittel 19 wie Kühlflüssigkeit vorgesehen und in entsprechender Weise am oberen Behälterdeckel 24 angeformt, wobei die Einfüllstutzen 2 und 3 mit Stopfen versehen sind. Diese besitzen unterschiedliche Formen, so daß Verwechslungen vermieden werden.

Die Entlüftung des Motors und des Kühlers im Betrieb geschieht über (nicht veranschaulichte) Leitungen, die über obere Anschlüsse 4 und 5 im Behälter 20 enden. Im in Fig. 1 rechts oben veranschaulichten Vorratsraum 15 sind geeignete (nicht veranschaulichte) Einbauten vorgesehen, welche garantieren, daß sich die über die Anschlüsse 4 und 5 in den Behälter 20 eingedrungene Luft und das Wasser entmischt haben, bevor das Kühlwasser erneut vom Motor durch den Anschluß 6 zur Motorpumpe (nicht gezeigt) angesaugt wird.

Bei Einsatz des Behälters 20 als reiner Vorrats- und Ausgleichsraum wird die Verbindungsöffnung 8 zwischen der Kammer 17 und der Kammer 18 mit einem geeigneten Stopfen verschlossen.

Das durch den Einfüllstutzen 3 in die Kammer 15 eingefüllte Kühlwasser strömt über die obere Flüssigkeitsöffnung 10 in der vertikalen Trennwand 22 auch in die seitlich benachbarte Kammer 17. Damit in den beiden Kammern 15 und 17 das Kühlwasser immer den gleichen Pegel einnimmt, kann über die obere Entlüftungsöffnung 9 in der vertikalen Trennwand 22 ein Luftaustausch erfolgen. Dehnt sich bei betriebswarmem Motor die Kühlflüssigkeit aus, wird zuerst die Luft aus den Kammern 15 und 17, danach das überschüssige Wasservolumen über das Ausgleichsrohr 25 in die Ausgleichskammer 16 geleitet. Die Ausgleichskammer 16 ist durch die untere Flüssigkeitsöffnung 13 in der vertikalen Trennwand 22 im Bereich des Behälterbodens 23 für eine gleichmäßige Wasserverteilung und über die untere Entlüftungsöffnung 11 in der vertikalen Trennwand 22 für den Druckausgleich mit der Kammer 18 verbunden. Beim Überströmen des Kühlwassers steigt in den Kammern 16 und 18 der Druck. Zur Begrenzung ist an der Außenwand der Kammer 16 ein Überdruckventil 14 mit einstellbarem Öffnungsdruck angebracht. Zur Kontrolle des Kühlmittelstandes kann ferner in der Kammer 16 ein Füllstandssensor (nicht gezeigt) angebracht sein.

Wird der Behälter 20 als Kombination sowohl mit einem Vorrats- und Ausgleichsbehälter für Kühlflüssigkeit als auch mit einem Vorratsbehälter für Scheibenwaschflüssigkeit eingesetzt, müssen die Entlüftungsöffnungen 9 und 11 sowie die Flüssigkeitsöffnungen 10 und 13 in der vertikalen Trennwand 22 mit geeigneten Stopfen verschlossen werden, während die weitere Verbindungsöffnung 8 in der horizontalen Trennwand 21 geöffnet bleibt, um die übereinander angeordneten Kammern 17 und 18 miteinander zu verbinden. Dadurch kann durch den Einfüllstutzen 2 Waschflüssigkeit in die obere Kammer 17 wie auch in die darunterliegende Kammer 18 eingefüllt und bei Bedarf der Scheibenwaschpumpe (nicht gezeigt) über den Auslaß 12 zugeführt werden. Die Kammern 15 und 16 erfüllen dann die vorstehend beschriebene Funktion als Vorratsbehälter und als Ausgleichsraum für die Kühlflüssigkeit.

In den Figuren 5 und 6 ist ein Behälter 20 mit drei nebeneinander angeordneten inneren Kammern 15, 16 und 17 gezeigt, der grundsätzlich nach Art des ersten Ausführungsbeispiels aufgebaut ist. Es sind zwei im wesentlichen vertikale Trennwände 22 vorgesehen, die mit ihren unteren Enden aufeinander zulaufen. Im unteren Verbindungsbereich der Trennwände 22 befindet sich eine innere Öffnung 13, die eine Verbindung zwischen den äußeren Kammern 15 und 17 herstellen kann. Ist die Öffnung 13 gemäß Fig. 5 geschlossen, so wird die Kammer 17 als Scheibenwaschbehältnis und die beiden restlichen Kammern 15, 16 als Kühlflüssigkeitsbehältnis betrieben. Die Kammer 15 dient hierbei als eigentliches Vorratsbehältnis, während die benachbarte Kammer 16 das Ausgleichsbehältnis darstellt. Die Kammern 15 und 16 sind durch eine obere Öffnung miteinander verbunden, die dem Ausgleichsrohr 25 des ersten Ausführungsbeispiels entspricht.

Ist die Öffnung 13 gemäß Fig. 6 geöffnet, so dient die Kammer 17 nunmehr nicht zur Aufnahme von Waschflüssigkeit einer Scheibenwaschanlage, sondern zusätzlich zur Aufnahme von Kühlflüssigkeit beispielsweise für schwere Nutzfahrzeuge.

**Patentansprüche**

1. Behälter (20) für Betriebsmittel (19) in Kraftfahrzeugen, der im Motorraum angeordnet ist, mit Kammern (15, 16, 17, 18), die für eine Waschflüssigkeit einer Scheibenwaschanlage und für eine Kühlflüssigkeit eines flüssigkeitsgekühlten Motors verwendbar sind, dadurch gekennzeichnet, daß der Behälter (20) aus

— einer ersten (15), mit einem Einfüllstutzen (3) für die Kühlflüssigkeit eines flüssigkeitsgekühlten Motors versehenen Kammer
— einer zweiten (16), mit der ersten (15) Kammer verbundenen (25) Ausgleichskammer für die Kühlflüssigkeit
— einer dritten (17), mit einem Einfüllstutzen (2) für die Scheibenwaschflüssigkeit versehenen Kammer
— und ggf. einer vierten (18), mit der dritten (17) verbindbaren Kammer

besteht, wobei die erste (15) und zweite (16) bzw. die dritte (17) und ggf. die vierte (18) Kammer ausschließlich als reine Vorrats- und Ausgleichskammern für die Kühlflüssigkeit bzw. als reines Vorratsbehältnis für die Scheibenwaschflüssigkeit betrieben werden (Fig. 5 und 4) oder wobei die erste (15) mit der dritten (17) Kammer und ggf. die zweite (16) mit der vierten (18) Kammer derart verbindbar sind, daß die erste (15) und dritte (17) Kammer zusammen ein vergrößertes Vorratsbehältnis für die Kühlflüssigkeit und die zweite (16) ggf. zusammen mit der vierten (18) Kammer ein Ausgleichsbehältnis für die Kühlflüssigkeit bilden (Fig. 6 und 2).

2. Behälter (20) nach Anspruch 1, dadurch gekennzeichnet, daß der aus einer ersten (15), zweiten (16), dritten (17) und vierten (18) Kammer integriert ausgebildete Behälter (20) eine innere durchgehende Horizontal- und eine innere durchgehende Vertikaltrennwand (21 bzw. 22) aufweist, wobei in der Vertikaltrennwand (22) unmittelbar über dem Behälterboden (23) und unmittelbar über der Horizontaltrennwand (21) verschließbare Flüssigkeitsöffnungen (13, 10) und unmittelbar unter dem Behälterdeckel (24) und der Horizontaltrennwand (21) verschließbare Entlüftungsöffnungen (9, 11) sowie in der Horizontaltrennwand (21) zumindest eine weitere verschließbare Verbindungsöffnung (8) für die Verwendung der übereinander angeordneten dritten (17) und vierten (18) Kammern als Vorratsbehältnis für die Scheibenwaschflüssigkeit mit einem oberen Einfüllstutzen (2) vorgesehen sind, während die anderen benachbarten übereinander angeordneten ersten (15) und zweiten (16) Kammern Außenanschlüsse (4, 5, 6) und Öffnungen (3, 14) für ein oberes Vorratsbehältnis für die Kühlflüssigkeit bzw. ein unteres Ausgleichsbehältnis für die Kühlflüssigkeit enthalten wobei die erste (15) und zweite (16) Kammer über ein inneres Ausgleichsrohr (25) miteinander verbunden sind (Fig. 4).

3. Behälter (20) nach Anspruch 1 oder 2, dadurch gekennzeichnet, daß die verschließbaren Öffnungen (8, 9, 10, 11, 13) durchbrechbare Öffnungen sind, d.h. die Öffnungen einen durchbrechbaren Umfangsrand mit verringerter Wandstärke aufweisen.

4. Behälter (20) nach Anspruch 1 oder 2, dadurch gekennzeichnet, daß die Öffnungen (8, 9, 10, 11, 13) durch Stopfen verschließbar sind.

5. Behälter (20) nach einem der Ansprüche 1 bis 4, dadurch gekennzeichnet, daß die Öffnungen (8, 9, 10, 11, 13) zumindest teilweise zu Außenöffnungen (2, 6, 12) des Behälters (20) fluchten.

6. Behälter (20) nach Anspruch 1 oder 2, dadurch gekennzeichnet, daß die Öffnungen (8, 9, 10, 11, 13) durch in der Trennwand geführte Schieber von außen verschließbar sind.

7. Behälter (20) nach einem der Ansprüche 1 bis 6, dadurch gekennzeichnet, daß seine Außenkontur seinem Befestigungsort angepaßt ist.

**Claims**

1. A container (20) for working materials (19) as used in a motor vehicle, the container being installable in the vehicle's engine compartment and being provided with chambers (15, 16, 17, 18) usable for holding the washing liquid of a pane-washing appliance and the cooling liquid for a liquid-cooled engine, characterized in that the container (20) comprises:

— a first chamber (15) fitted with an inlet (3) for the cooling liquid of the liquid-cooled engine,
— a second, equalizing, chamber (16) connected (25) to the first chamber (15) and serving to equalize the cooling liquid,
— a third chamber (17) fitted with an inlet (2) for the panewashing liquid,
— and, possibly, a fourth chamber (18) connectable to the third chamber (17),

in that the first chamber (15) and the second chamber (16) and, respectively, the third chamber (17) and, possibly, the fourth chamber (18) are exclusively operable as proper storage and equalization chambers for the cooling liquid and, respectively, as a proper storage chamber for the pane-washing liquid (Figs. 4 and 5), or in that the first chamber (15) is connectable in such a way to the third one (17) and, possibly, the second chamber (16) to the fourth one (18) that the first chamber (15) together with the third chamber (17) form an enlarged storage chamber for the cooling liquid while the second chamber (16) together, possibly, with the fourth chamber (18) form the equalization chamber for the cooling liquid (Figs. 4 and 2).

2. A container (20) according to claim 1, characterized in that the container (20), which is integrally constructed with the first (15), second (16), third (17) and fourth (18) chambers, is provided with an internal continuous horizontal partition (21) and an internal continuous vertical partition (22), that closable ports (13 and, respectively, 10) for the passage of the respective liquid are arranged in the vertical partition directly above the container bottom (23) and directly above the horizontal partition (21), that closable vents (9 and, respectively, 11) are also arranged in the vertical partition directly below the container cover (24) and directly below the horizontal partition (21), that at least one closable connecting port (8) is arranged in the horizontal partition (21) so as to permit the superposed third (17) and fourth (18) chambers to be used as one enlarged storage chamber for the pane-washing liquid, which is feedable thereinto through the inlet (2) located at the container top, that the other adjacently superposed first (15) and second (16) chambers are provided with outwardly extending connectors (4, 5, 6) and ports (3 and, respectively, 14) for the upper storage chamber for the cooling liquid and the lower equalization chamber for the cooling liquid, and in that the first (15) and the second (16) chambers are interconnected by an equalization tube (25).

3. A container (20) according to claim 1 or claim 2, characterized in that the closable ports (8, 9, 10, 11, 13) are pierceable ones, which is to be understood to mean that each of the ports is provided with a pierceable circumferential skirt of reduced wall thickness.

4. A container (20) according to claim 1 or claim 2, characterized in that the ports (8, 9, 10, 11, 13) are closable by plugs.

5. A container (20) according to any of the claims 1 to 4, characterized in that at least some of the ports (8, 9, 10, 11, 13) are aligned with the outwardly extending ports (2, 6, 12) of the container (20).

6. A container (20) according to claim 1 or claim 2, characterized in that the ports (8, 9, 10, 11, 13) are closable from outside by means of slides guided in the respective partition.

7. A container (20) according to any of the claims 1 to 6, characterized in that its external shape is such as to suit the place of its installation.

## Revendications

1. Réservoir (20) pour moyens (19) de fonctionnement dans des véhicules automobiles, installé dans l'espace moteur, avec des chambres (15, 16, 17, 18) qui sont utilisables pour un liquide de lavage d'un équipement de lavage de vitre et pour un liquide de refroidissement d'un moteur refroidi par liquide, caractérisé en ce que le réservoir (20) est constitué:

— d'une première chambre (15) munie d'une tubulure (3) de remplissage pour le liquide de refroidissement d'un moteur refroidi par liquide,

— d'une deuxième chambre (16) d'équilibrage reliée à la première chambre (15) pour le liquide de refroidissement,

— d'une troisième chambre (17) munie d'une tubulure (2) de remplissage pour le liquide de lavage de vitre,

— et, le cas échéant, d'une quatrième chambre (18) pouvant être reliée à la troisième chambre (17), pour lequel la première (15) et la deuxième (16) chambre et respectivement la troisième (17) et, le cas échéant, la quatrième (18) chambres servent exclusivement de véritables chambres de provision et d'équilibrage pour le liquide de refroidissement, et respectivement de réservoir de provision pour le liquide de lavage de vitre (voir figures 5 et 4);

ou bien pour lequel la première chambre (15) peut être reliée à la troisième chambre (17), et, le cas échéant, la deuxième chambre (16) peut être reliée à la quatrième chambre (18), de telle sorte que la première (15) et la troisième (17) chambre forment un réservoir de provision agrandi pour le liquide de refroidissement, et que la deuxième chambre (16), le cas échéant, reliée à la quatrième chambre (18), forme un réservoir d'équilibrage pour le liquide de refroidissement (voir figures 6 et 2).

2. Réservoir (20) selon la revendication 1, caractérisé en ce que le réservoir (20), formé d'une première (15), d'une deuxième (16), d'une troisième (17) et d'une quatrième (18) chambre intégrée, présente une paroi intérieure horizontale continue (21) de séparation et une paroi intérieure verticale continue (22) de séparation, dans lequel sont prévues, dans la paroi verticale (22) de séparation directement au-dessus du fond (23) du réservoir et directement au-dessus de la paroi horizontale (21) de séparation, des ouvertures (13, 10) pour liquides pouvant être obturées, et directement en-dessous du couvercle (24) du réservoir et de la paroi horizontale (21) de séparation, des ouvertures (9, 11) d'aération pouvant être obturées, ainsi que dans la paroi horizontale (21) de séparation au moins une autre ouverture (8) de liaison pouvant être obturée, pour l'utilisation des troisième (17) et quatrième (18) chambre disposée l'une au-dessus de l'autre en tant que réservoir de provision pour le liquide de lavage de vitre, avec une tubulure supérieure (2) de remplissage, tandis que les autres première (15) et deuxième (16) chambres voisines disposées l'une au-dessus de l'autre comportent des raccordements extérieurs (4, 5, 6) et des ouvertures (3, 14) pour un réservoir supérieur de provision pour le liquide de refroidissement et respectivement pour un réservoir inférieur d'équilibrage pour le liquide de refroidissement, dans lequel les première (15) et deuxième (16) chambres sont reliées l'une à l'autre par un tube intérieur (25) d'équilibrage (voir figure 4).

3. Réservoir (20) selon la revendication 1 ou 2, caractérisé en ce que les ouvertures (8, 9, 10, 11, 13) sont des ouvertures ouvrables par enfoncement, c'est-à-dire que les ouvertures présentent un bord périphérique avec une épaisseur réduite de paroi.

4. Réservoir (20) selon la revendication 1 ou 2, caractérisé en ce que les ouvertures (8, 9, 10, 11, 13) peuvent être fermées par des bouchons d'obturation.

5. Réservoir (20) selon l'une quelconque des revendications 1 à 4, caractérisé en ce que les ouvertures (8, 9, 10, 11, 13) sont au moins partiellement alignées avec des ouvertures extérieures (2, 6, 12) du réservoir (20).

6. Réservoir (20) selon la revendication 1 ou 2, caractérisé en ce que les ouvertures (8, 9, 10, 11, 13) peuvent être obturées de l'extérieur par des registres guidés dans les parois de séparation.

7. Réservoir (20) selon l'une quelconque des revendications 1 à 6, caracterisé en ce que son contour extérieur est adapté à son emplacement de fixation.

EP 0 213 414 B1

Fig. 1

Fig.2

Fig.3

Fig.4

EP 0 213 414 B1

_Fig.5_

_Fig.6_

11